# EUROPÄISCHE PATENTSCHRIFT

(11) **EP 1 315 144 B1**
(45) Veröffentlichungstag und Bekanntmachung des Hinweises auf die Patenterteilung: **06.07.2011**
(21) Anmeldenummer: 02026525.2
(22) Anmeldetag: 27.11.2002
(51) Int. Cl.: G10K 9/122

(54) **Ultraschallwandler und Durchflussmesser**
Ultrasonic transducer and flowmeter
Transducteur à ultrasons et débitmètre

(30) Priorität: 27.11.2001 DE 10158015
(43) Veröffentlichungstag der Anmeldung: 28.05.2003
(73) Patentinhaber: Hydrometer GmbH, 91522 Ansbach (DE)
(72) Erfinder: Hauenstein, Günther, 63477 Maintal 3 (DE); Klass, Walter, 91522 Ansbach (DE); Gaugler, Ulrich, 91746 Weidenbach (DE); Sonnenberg, Hans-Michael, 90616 Neuhof (DE)
(74) Vertreter: Stippl, Hubert

(56) Entgegenhaltungen:
- EP-A2- 0 930 607
- DE-A1- 3 441 684
- DE-A1- 4 215 271
- DE-B1- 2 934 031
- GB-A- 2 029 160
- JP-A- 60 216 698
- US-A- 4 705 981
- US-A- 4 754 440

## Beschreibung

Die vorliegende Erfindung betrifft einen Ultraschallwandler, insbesondere für den Einsatz in einem Durchflußmesser für flüssiges oder gasförmiges Medium mit den weiteren Merkmalen des Oberbegriffes des Patentanspruchs 1. Die Erfindung betrifft außerdem einen Durchflußmesser für flüssiges oder gasförmiges Medium mit mindestens einem Ultraschallwandler gemäß der vorliegenden Erfindung.

Ultraschallwandler, die insbesondere für den Einsatz in einem Durchflußmesser für flüssiges oder gasförmiges Medium konzipiert sind, weisen mindestens einen piezoelektrischen Körper, insbesondere eine piezoelektrische Scheibe auf, die in einem topfförmigen Wandlergehäuse angeordnet ist und an deren dem Medium zugewandten Vorderseite eine erste Elektrode sowie an deren Rückseite eine zweite Elektrode angeordnet ist. Die erste Elektrode ist ferner mit einer ersten Anschlußelektrode (sogenannte Membran) und die zweite Elektrode mit einer zweiten Anschlußelektrode zur Stromzuführung kontaktiert.

Ein Ultraschallwandler der beschriebenen Art ist aus DE 29 34 031 bekannt, bei welchem die piezoelektrische Scheibe auf einer Schulter des topfförmigen Wandlergehäuses in radialer Richtung bewegbar aufliegt, an ihrer Mantelfläche vom Wandlergehäuse distanziert ist und mittels einer elastischen Dichtung sowohl gegen das Wandlergehäuse abgedichtet als auch elastisch gehalten ist. An Vorder- und Rückseite der piezoelektrischen Scheibe ist eine flächige Elektrode angeordnet. Die ersten sowie zweiten Anschlußelektroden sind als Anschlußdrähte ausgebildet, die mit einem Ende mit einem den Gehäuseboden durchdringenden Stromkabel und mit ihrem anderen Ende jeweils mit einer Elektrode verbunden sind. Die Drähte durchsetzen dabei den ultraschallisolierenden Raum zwischen der Rückseite der piezoelektrischen Scheibe und dem Gehäuseboden. Der Nachteil dieses Ultraschallwandlers besteht darin, daß die Verdrahtung einen größeren Aufbau des gesamten Ultraschallwandlers erfordert. Die Montage eines derartigen Ultraschallwandlers kann nicht automatisiert durchgeführt werden. Außerdem führen die an jeweils einem bestimmten Punkt der Elektrode befestigten Anschlußdrähte zu einer geometrie- und lötmassenabhängigen Bedämpfung der piezoelektrischen Scheibe.

Bei dem aus EP 0 897 101 bekannten Ultraschallwandler sind dessen Elektroden ebenfalls mit Anschlußdrähten verbunden, die durch eine Öffnung des Gehäuses nach außen geführt sind. Auf das Gehäuse ist eine Membrane aufgeschweißt, die die piezoelektrische Scheibe unter Zugspannung hält und axial gegen ein im Gehäuse eingelegtes Kunststoffteil drückt. Die gesamte Montage des Ultraschallwandlers erweist sich u. a. durch das Aufschweißen der Membrane sowie das zusätzlich eingelegte Kunststoffteil als äußerst aufwendig und demnach kostenintensiv.

Auch der aus EP 0 679 874 bekannte Schallsensor zeigt einen relativ sperrigen Aufbau, bei welchem ein Zentrierteil innerhalb eines topfförmigen Gehäuseteils vorgesehen ist, um die piezokeramische Scheibe in ihrer Lage zu stabilisieren. Ein zusätzliches Andruckteil drückt aufgrund einer Anpreßkraft über eine Kontaktfolie die piezoelektrische Scheibe auf den Boden. Das Andruckteil weist außerdem einen mittig liegenden, stiftförmigen Fortsatz auf, dessen Ende zum Anschluß einer elektrischen Leitung dient.

Der aus US 4 705 981 A bekannte Ultraschallwandler weist vorderseitig eine Membran auf, die auf der Elektrode eines piezoelektrischen Elementes aufliegt. Die Membran ist dabei zum peripheren Eckbereich eines oberen Wandbereichs, z.B. mittels Silikongummi, abgedichtet. Darüber hinaus ist die Membran seitlich zwischen ober- und unterseitigen elastischen Elementen eingebettet. Diese Dichtungen dienen der Abdichtung von Bereichen innerhalb des Ultraschallwandlers.

Aus DE 42 15 271 A1 ist ein Ultraschallwandler mit einem Wandlergehäuse bekannt, das stirnseitig durch eine Membran abgeschlossen ist, an der innen ein piezoelektrischer Wandler stoffschlüssig befestigt ist. Auf der gegenüberliegenden Seite des Gehäuses ist ein Verschlussdeckel angebracht, in den ein Anschlussstift isoliert eingreift.

Der aus US 4 754 440 A bekannte Ultraschallwandler umfasst eine topfförmige Membran, welche auf der Elektrodenschicht eines piezoelektrischen Elementes aufliegt, Die Rückseite des piezoelektrischen Elementes ist auch mit einer elektronischen Schicht versehen und mit einer elektrischen Leitung verbunden, welche nach außen führt.

Der vorliegenden Erfindung liegt die Aufgabe zugrunde, einen einfach montierbaren Ultraschallwandler zu schaffen, der einfach aufgebaut ist und dessen piezoelektrischer Körper eine nur geringe Radialbedämpfung erfährt.

Diese Aufgabe wird durch die kennzeichnenden Merkmale des Patentanspruches 1 gelöst. Vorteilhafte Weiterbildungen der Erfindung ergeben sich aus den Unteransprüchen 2-9.

Ein erfindungsgemäßer Durchflußmesser geht aus Anspruch 10 hervor.

Der erfindungsgemäße Ultraschallwandler ist derart aufgebaut, daß die erste Anschlußelektrode als topfförmige Membran ausgebildet ist, zusätzlich zum Wandlergehäuse vorgesehen ist und das Wandlergehäuse verschließt, wobei die Membran einen umlaufenden Rand aufweist. Der umlaufende Rand der Membran befindet sich zwischen dem Wandlergehäuse und einem außerhalb des Wandlergehäuses angeordneten O-Ring, der Bestandteil des Wandlergehäuses ist. Der O-Ring (z.B. aus Elastomer) kann in einer Freimachung des Wandlergehäuses eingelegt sein. Der O-Ring kann im Eckbereich zwischen Steg und angrenzender Fläche des Wandlergehäuses vorgesehen sein. Die piezoelektrische Scheibe ist dabei radial beweglich, d. h. ohne radiale Bedämpfung am Wandlergehäuse positioniert. Der piezoelektrische Körper wird von der Membran in seiner Position fixiert. Der Ultraschallwandler ist demnach äußerst kompakt mit nur wenig Bauteilen aufgebaut und zeichnet sich durch einen kleinen Offset und einen hohen Automatisierungsgrad aus. Liegen die Einzelbauteile fertig vor, kann der Ultraschallwandler vollautomatisch montiert werden.

Die Membran kann zumindest teilweise zwischen dem O-Ring und der angrenzenden Fläche des Wandlergehäuses entlangführen. Die Membran weist demnach also eine umlaufende Krempe auf. Diese Verbindung hat den Vorteil, daß eine gleichbleibende Fixierung des Schwingelementes und/oder eine gleichbleibende Schallbrücke oder Schallisolation zwischen Wandlergehäuse und Schwingelement sichergestellt wird. Auf dem Steg und/oder der angrenzenden Fläche des Wandlergehäuses kann zusätzlich ein Klebstoff oder ein doppelseitiges Klebeband aufgebracht werden, was die Verbindung zusätzlich festigt.

Die an der piezoelektrischen Scheibe angeordneten ersten und zweiten Elektroden, die zum Polarisieren der piezoelektrischen Scheibe und zum Kontaktieren dienen, können mit den jeweils zugeordneten Anschlußelektroden auch einteilig ausgebildet sein.

In einer möglichen Ausführungsvariante kann das Wandlergehäuse topfförmig mit offener Seite ausgebildet sein, wobei die Membran die offene Seite des Wandlergehäuses verschließt. Dabei ist sichergestellt, daß die piezoelektrische Scheibe weiterhin radial beweglich ist.

In einer weiteren Ausführungsvariante kann die piezoelektrische Scheibe auch am Wandlergehäuse angeordnet sein und wird dabei durch die Membran am Wandlergehäuse gehalten.

Die Membran kann unmittelbar mit dem Medium in Kontakt stehen und es sind keine weiteren Bauteile zu deren Schutz oder dergleichen notwendig.

Die piezoelektrische Scheibe kann ein Dickenresonanzschwinger sein. Daher ist es notwendig, dem Schwingelement radial Freiraum zu geben, um die Materialverdrängung infolge der Dickenschwingungen nicht zu bedämpfen.

Die Membran kann eine Krempe aufweisen, die im Gehäuse bzw. an einer Seitenwandung des Wandlergehäuses einliegt. Dadurch wird eine besonders sichere Fixierung der Membran ermöglicht.

Die piezoelektrische Scheibe kann auf einer insbesondere vorstehenden Auflage des Wandlergehäuses aufliegen und ist somit in axialer Richtung in ihrer Lage gesichert, wobei ein freies Schwingen infolge der auf der Vorderseite angeordneten Membran möglich ist. Gleichzeitig liegt die piezoelektrische Scheibe, auch als Piezo-Dickenschwinger bezeichnet, radial beweglich auf der vorstehenden Auflage des Wandlergehäuses auf. Die Piezoscheibe ist demnach beim topfförmigen Wandlergehäuse seitlich davon distanziert. Die vorstehende Auflage kann z. B. ringförmig oder auch vollflächig ausgebildet sein.

Insbesondere kann die Auflage ein integraler Bestandteil des Wandlergehäuses sein. Damit kann die Kompaktheit, die Stabilität sowie die Montagefreundlichkeit des Ultraschallwandlers wesentlich erhöht werden.

Der umlaufende Rand der topfförmigen Membran kann an einem umlaufenden Steg des Wandlergehäuses (insbesondere von außen) anliegen. Mittels dieser Konstruktion kann eine einfache Montage von Membran und Wandlergehäuse erfolgen, wobei gleichzeitig eine sichere Verbindung der beiden Bauteile gewährleistet ist.

Der umlaufende Rand der Membran kann zu einem umlaufenden Steg oder zum Wandlergehäuse unter Bildung eines Spalts verlaufen. Dies führt zu einer Entkopplung von Membran und Wandlergehäuse mit dem Vorteil, daß die jeweiligen Komponenten eine Wärmeausdehnungsmöglichkeit haben.

Der umlaufende Steg ist zur piezoelektrischen Scheibe distanziert, damit die piezoelektrische Scheibe radial frei schwingen kann. Außerdem wird dadurch für einen Klebegrat Platz geschaffen, der z. B. durch eine eventuelle Klebeverbindung zwischen Wandlergehäuse und Anschlußelektrode bzw. Anschlußelektrode und Elektrode entsteht, ohne daß der Klebegrat die radiale Schwingung der Piezoscheibe behindert. Der Klebegrat behindert dadurch auch nicht die axiale Aufnahme der piezoelektrischen Scheibe.

Die erste Elektrode und/oder die zweite Elektrode liegen vorteilhafterweise flächig, insbesondere vollflächig auf der piezoelektrischen Scheibe auf. Eine optimale Signalzu- und abführung auf die piezoelektrische Scheibe wird damit erzielt.

Vorteilhafterweise kontaktiert die erste Membran die erste Elektrode und/oder die zweite Anschlußelektrode auch die zweite Elektrode im wesentlichen vollflächig, womit die piezoelektrische Scheibe zum einen sicher zwischen den Anschlußelektroden fixiert ist. Zum anderen erfolgt durch die vollflächige Kontaktierung der Anschlußelektroden mit den Elektroden eine optimale Signalübertragung.

Ferner bewirkt die vollflächige Kontaktierung der Anschlußelektroden eine Unterdrückung und damit Vermeidung von parasitären Resonanzen, die zu frequenzabhängigen Schwingungsformen führen. Der Durchmesser der jeweiligen Anschlußelektrode kann vorteilhafterweise mindestens so groß wie sein wie der Durchmesser des Schwingelementes (piezoelektrische Scheibe) bzw. wie der Durchmesser der jeweils dazugehörigen Elektrode. Durch die Anschlußelektroden werden parasitäre Radialschwingungen unterdrückt. Außerdem wird durch die flächenmäßig größeren Anschlußelektroden gegenüber den Elektroden die aktive Fläche und damit die Signalenergie vergrößert. Die Folge ist u. a., daß eine individuelle Frequenzeinstellung nicht mehr vorgeschrieben werden muß.

Um eine gute Fixierung bzw. Positionierung der piezoelektrischen Scheibe und optimale Signalübertragung zu erreichen, kann die zweite Anschlußelektrode mit der piezoelektrischen Scheibe bzw. der darauf angeordneten zweiten Elektrode verklebt sein.

Ebenso kann auch die andere Seite der piezoelektrischen Scheibe bzw. die erste Elektrode mit der Membran z. B. mittels eines harten, dünnflüssigen Klebers verklebt sein, um auch auf der dem Medium zugewandten Seite eine optimale Signalübertragung und auch Positionierung der piezoelektrischen Scheibe zu gewährleisten. Der kleinste Offsetdrift wird erreicht, wenn die Klebeverbindung und die Flächenauflage vor und hinter der piezoelektrischen Scheibe vergleichbare akustische Eigenschaften haben.

Es kann auch die zweite Anschlußelektrode mit der Auflage verklebt sein.

Ferner kann zwischen der zweiten Anschlußelektrode und dem Wandlergehäuse, insbesondere dessen Auflage, ein doppelseitiges Klebeband vorgesehen sein, das sowohl als Montagehilfe als auch als zuverlässige akustische Brücke zum Wandlergehäuse dient. Das Klebeband kann etwa eine Stärke von insbesondere 0,01 mm bis 0,1 mm aufweisen und zur Gewährleistung eines konstanten Schwingverhaltens der piezoelektrischen Scheibe dauerelastisch ausgebildet sein. Indem das Klebeband an jeder Stelle dieselbe Stärke aufweist, gewährleistet es auch an jeder Stelle einen konstanten Spalt zwischen der Auflage und der Anschlußelektrode, was wiederum zu einem optimalen Meßverhalten führt.

Eine weitere Möglichkeit besteht darin, daß der umlaufende Rand der Membran formschlüssig in den umlaufenden Steg des Wandlergehäuses eingreift oder den umlaufenden Steg formschlüssig umschließt.

Das Wandlergehäuse, insbesondere der Steg oder eine umlaufende, an den Steg angreifende Fläche kann partielle Vertiefungen zur Befestigung der Membran aufweisen. In diese partiellen Vertiefungen kann die Membran mittels einer Rastverbindung formschlüssig eingreifen. Das Wandlergehäuse, insbesondere der Steg oder die umlaufende, an den Steg angreifende Fläche, kann auch eine umlaufende Nut zur Befestigung der Membran aufweisen. Die Membran kann dabei ebenfalls in die umlaufende Nut formschlüssig eingreifen (z. B. mittels einer Rastverbindung), womit die Membran sicher am Wandlergehäuse befestigt ist. Bei diesen Verbindungen kann natürlich zusätzlich eine Klebeschicht zwischen Membran und Wandlergehäuse zur sicheren Abdichtung vorgesehen sein.

Erfindungsgemäß kann die piezoelektrische Scheibe ohne Vorspannung auf der Auflage aufliegen. Dadurch wird eine freie Schwingung ermöglicht mit der Folge eines geringsten Meßfehlers sowie einer geringsten Verzerrung der Offset-Stabilität.

Die piezoelektrische Scheibe ist zweckmäßigerweise von dem Steg des Wandlergehäuses bzw. dem Rand der Membran beabstandet, so daß die Materialverdrängung infolge der Dickenschwingung nicht gedämpft wird.

Mit besonderem Vorteil kann das Wandlergehäuse ein Teil des Durchflußmessers, z. B. einer Wirbelkammer oder eines Sensorgehäuses sein. Die Montage der übrigen Bauteile kann dabei in einfacher Weise erfolgen. Durch die Integration des Trägers in einen Teil einer Anschlußgruppe des Durchflußzählers kann eine weitere Dichtung entfallen.

Die zweite Anschlußelektrode, die an der Rückseite der piezoelektrischen Scheibe angeordnet ist, kann auch durch eine metallische Beschichtung der Auflage gebildet sein. Dies erleichtert die Gesamtmontage des Ultraschallwandlers noch weiter.

Mit Vorteil kann die erste und/oder zweite Elektrode auf die piezoelektrische Scheibe aufgedampft oder mittels Siebdruckverfahren aufgebracht und anschließend eingebrannt oder aufgesputtert werden. Die Elektroden müssen demnach bei der Montage nicht gesondert in den Ultraschallwandler eingesetzt werden. Das Aufdampfen, Aufdrucken oder Aufsputtern der Elektroden bewirkt außerdem eine sichere und dauerhafte Verbindung mit der piezoelektrischen Scheibe. Die erste und/oder zweite Elektrode können z. B. aus Ag, CrNi oder einer Legierung mit einem dieser Metalle bestehen.

Mindestens eine der Elektroden kann auch auf die Vorder- und/oder Rückseite der piezoelektrischen Scheibe aufgeklebt werden, wobei die Nebenresonanzen durch diese aufgeklebte Elektrode (n) unterdrückt werden.

Die piezoelektrische Scheibe und die Membran bzw. die piezoelektrische Scheibe und die zweite Anschlußelektrode können vorteilhafterweise aus dem gleichen Material ausgeführt werden, um eine Spannungskorrision zu vermeiden. Ebenso können die jeweiligen Elektroden und/oder die Elektrode und die jeweils dazugehörige Anschlußelektrode aus demselben Material bestehen. Das Material der Elektroden und/oder der Anschlußelektroden kann dabei aus einem korrosions- und/oder erosionsbeständigem Material sein. Insbesondere ist es Aufgabe der Membran, das Schwingelement langzeitstabil gegen Wasser zu schützen.

Die Membran kann eine langzeit- und temperaturstabile Fixierung des piezoelektrischen Körpers bewirken.

Insbesondere die Membran, aber auch die zweite Anschlußelektrode können aus einem tiefziehfähigen Material, wie z. B. Ni oder CuNi, bestehen, um die Topfform problemlos herstellen zu können. Auch die Fahne der zweiten Anschlußelektrode kann mit einem solchen Material in einfacher Weise nach oben gebogen werden.

Die Membran kann Durchbrüche aufweisen, in die Zapfen des Wandlergehäuses eingreifen, wobei die Durchbrüche und die Zapfen miteinander verschweißt sind. Dies führt zu einer besonders innigen Verbindung von Membran und Wandlergehäuse.

Zusätzlich kann die Membran um den Rand der angrenzenden Fläche geführt sein. Die Membran ist also zunächst entlang des Steges, der angrenzenden Fläche und schließlich den Rand der angrenzenden Fläche geführt. Die Folge ist eine weitere Erhöhung der Festigkeit der Verbindung sowie der Dichtigkeit. Außerdem kann damit möglicherweise die Fixierung der Membran definierter eingestellt werden.

Damit die Bauteile bei der Montage leicht zusammenfallen können (Wurfpassung), kann das Wandlergehäuse sowie die Membran korrespondierende Schrägen aufweisen.

Die Erfindung ist anhand von vorteilhaften Ausführungsbeispielen anhand der Zeichnungsfiguren näher erläutert. Diese zeigen:
- Fig. 1: eine Prinzipdarstellung eines Ultraschallwandlers im Schnitt;
- Fig. 2: eine Draufsicht auf den Ultraschallwandler gemäß Fig. 1;
- Fig. 3: eine Prinzipdarstellung eines Ultraschallwandlers in einer alternativen Ausfüh- rungsform im Vergleich zu Fig. 1 im Schnitt.
- Fig. 4: eine perspektivische Darstellung des Ultraschallwandlers gemäß Fig. 3;
- Fig. 5: eine perspektivische Darstellung des Ultraschallwandlers gemäß Fig. 3 bzw. 4, teilweise geschnitten;
- Fig. 6: einen Ausschnitt des Ultraschallwandlers im Schnitt;
- Fig. 7: eine Schnittdarstellung des Ultraschallwandlers gemäß Fig. 5;
- Fig. 8: eine Möglichkeit der Anordnung der Ultraschallwandler in einem Durchfluß- messer;
- Fig. 9: eine Nebeneinanderanordnung der Ultraschallwandler mit getrennten Wandler- gehäuse und Membran;
- Fig. 10: eine Nebeneinanderanordnung der Ultraschallwandler mit gemeinsamen Wandlergehäuse und Membran;
- Fig. 11: eine perspektivische Darstellung einer alternativen Ausführungsvariante eines Ultraschallwandlers;
- Fig. 12: eine Schnittdarstellung des Ultraschallwandlers gemäß Figur 11, etwas abge- ändert;
- Fig. 13: eine Schnittdarstellung des Ultraschallwandlers gemäß Figur 11 sowie
- Fig. 14: eine perspektivische Unteransicht eines Ultraschallwandlers.

Bezugsziffer 1 bezeichnet den Ultraschallwandler in seiner Gesamtheit. Der Ultraschallwandler 1 ist insbesondere für den Einsatz in einem Durchflußmesser für flüssiges oder gasförmiges Medium konzipiert. Er weist eine piezoelektrische Scheibe 2 auf, die in einem topfförmigen Wandlergehäuse 3 mit offener Seite 22 angeordnet ist und an deren dem Medium zugewandten Vorderseite 4 eine erste Elektrode 6 sowie an deren Rückseite 5 eine zweite Elektrode 7 angeordnet ist. Ferner ist die erste Elektrode 6 mit einer ersten Anschlußelektrode und die zweite Elektrode 7 mit einer zweiten Anschlußelektrode 9 zur Stromzuführung kontaktiert. Das Stromkabel für die Stromzuführung ist mit Bezugsziffer 21 versehen. Die erste Anschlußelektrode ist als Membran 8 ausgebildet und zusätzlich zum Wandlergehäuse 3 vorgesehen. Die Membran 8 verschließt die offene Seite 22 des topfförmigen Wandlergehäuses 3. Mittels dieser Konstruktion ist die piezoelektrische Scheibe 2 sicher und stabil in der Aufnahme 10 gehalten. Bei der piezoelektrischen Scheibe 2 handelt es sich um einen Dickenresonanzschwinger. Um neben der gewünschten Dikkenschwingung unerwünschte oder parasitäre Schwingungsformen wie Radial- oder Diagonalschwingungen zu unterdrücken, sind gleichzeitig durch die Konstruktion Vorkehrungen getroffen, die diese Schwingungsformen unterdrücken.

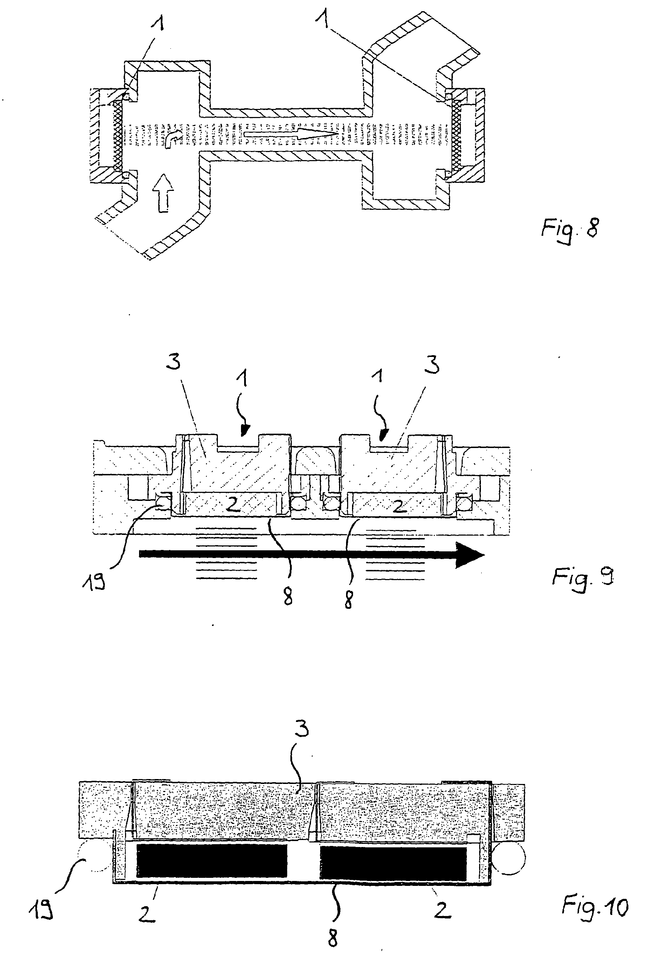

Die Membran 8 steht unmittelbar mit dem zu messenden Medium in Kontakt, wie z. B. aus Fig. 9 hervorgeht.

Die Membran 8 ist ebenfalls wie das Wandlergehäuse 3 topfförmig ausgebildet und mit dem Wandlergehäuse 3 so zusammengefügt, daß die Aufnahme 10 gebildet wird. Diese Ausgestaltung des Ultraschallwandlers erlaubt einen hohen Automatisierungsgrad bei dessen Herstellung.

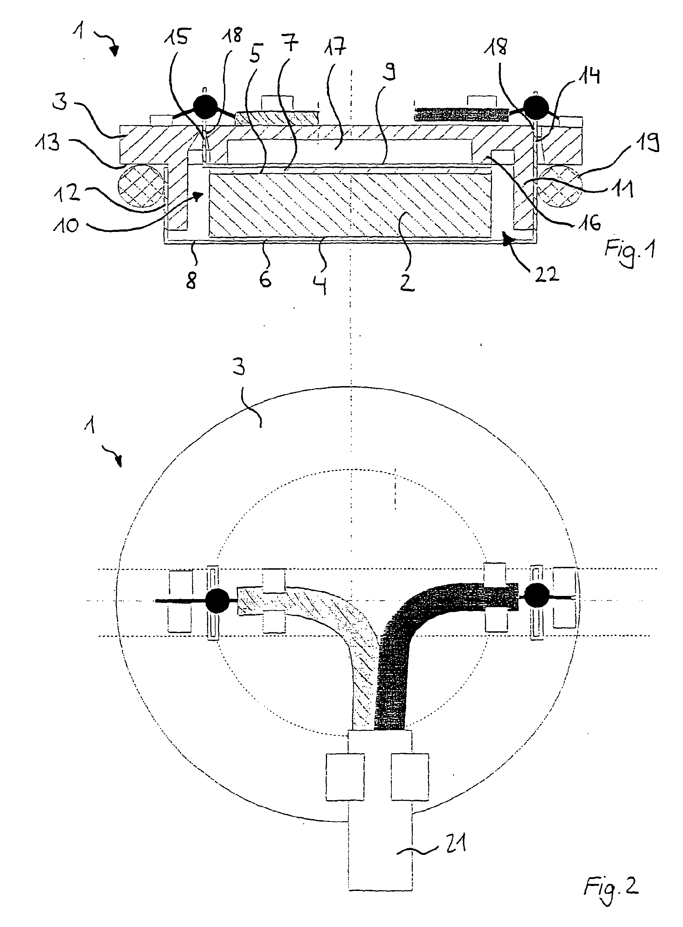

Die piezoelektrische Scheibe 2 liegt auf einer vorstehenden Auflage 16 des Wandlergehäuses 3 auf. Die Auflage 16 ist in Fig. 1 ringförmig ausgebildet. In den anderen Figuren ist die Auflage 16 flächig ausgebildet. Die piezoelektrische Scheibe 2 liegt demnach in einer axialen Richtung stabil auf und kann in Richtung Membran nach vorne sowie radial frei schwingen. Die piezoelektrische Scheibe 2 liegt außerdem von der Membran 8 fixiert auf der Auflage 16 auf. Die Auflage 16 ist integraler Bestandteil des Wandlergehäuses 3.

Die Membran 8 weist einen umlaufenden Rand 12 auf, der an einem umlaufenden Steg 11 des Wandlergehäuses 3 außen anliegt. Der umlaufende Rand 12 der Membran 8 kann den umlaufenden Steg 11 formschlüssig umschließen. Diese Verbindung kann zusätzlich mittels einer Klebstoffschicht zwischen Rand 12 und Steg 11 gesichert bzw. abgedichtet werden.

Der Durchmesser der Auflage 16 ist mindestens so groß wie der Durchmesser der piezoelektrischen Scheibe 2, um eine stabile Auflage der Scheibe 2 zu gewährleisten.

Die zweite Anschlußelektrode 9 ist mit der piezoelektrischen Scheibe 2 bzw. der zweiten Elektrode 7 verklebt. Andererseits ist die zweite Anschlußelektrode 9 auch mit der Auflage 16 verklebt, wozu ein doppelseitiges Klebeband verwendet wird, um einen konstanten Spalt und damit ein optimales Meßverhalten sicherzustellen.

Ebenso ist auch die Membran 8 mit der piezoelektrischen Scheibe 2 bzw. der ersten Elektrode 6 verklebt.

Die erste sowie zweite Anschlußelektrode 8, 9 weisen jeweils eine nach oben in Richtung eines elektrischen Anschlusses abstehende Fahne 14, 15 auf. Diese Fahnen 14, 15 dienen gleichzeitig - zumindest bei der Membran 8 - als Verlängerung des topfförmigen Randes 12 und bilden Kontaktzungen zur Verbindung (z. B. Steckverbindung) mit dem Stromkabel 21.

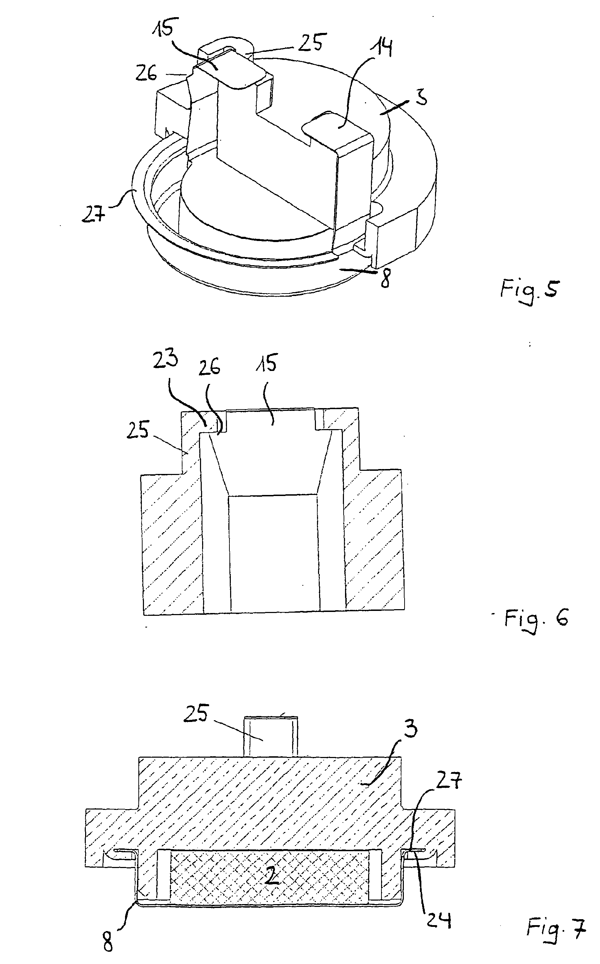

Die Fahnen 14, 15 der ersten sowie zweiten Anschlußelektroden 8, 9 treten durch Öffnungen 18 des Wandlergehäuses 3 nach außen und sind in den Öffnungen 18 mittels eines geeigneten Klebstoffes abgedichtet und damit gleichzeitig zugentlastet. Zur Erklärung der Zugentlastung der Fahnen 14, 15 wird auf die Figuren 5 - 7 Bezug genommen. Die Fahne 15 der zweiten Anschlußelektrode 9 bzw. ein Vorsprung 26 der Fahne 15 stützt sich gegen eine Stufe 23 des Wandlergehäuses 3 ab. Die Stufe 23 ist an einer Säule 25 des Wandlergehäuses 3 vorgesehen. Durch diese Abstützung wird eine Zugentlastung der Fahne 15 erreicht (vgl. zur Abstützung der Fahne 15 Fig. 5 und 6).

Die Membran 8 dagegen stützt sich in einer Rinne 24 des Wandlergehäuses 3 ab (siehe Figuren 5 und 7). Insbesondere ist an der Membran 8 eine Krempe 27 vorgesehen, die in der Rinne 24 einliegt.

Die piezoelektrische Scheibe 2 wird von der Membran 8 in ihrer Position fixiert und liegt dennoch ohne Vorspannung auf der Auflage 16 auf, so daß sie ein optimales Schwingverhalten ausbilden kann.

Der durch die vorstehende Auflage 16 und der Membran 8 gebildete Raum 17 ist in Fig. 1 mit Luft gefüllt und somit nahezu ultraschallisolierend. Die piezoelektrische Scheibe 2 ist von dem Steg 11 des Wandlergehäuses 3 bzw. dem Rand 12 der Membran 8 beabstandet, so daß die piezoelektrische Scheibe radial frei schwingen kann. Außerdem wird durch diesen Abstand ein Aufnahmereservoir für überschüssigen Klebstoff oder Klebstoffgrate gebildet, die demnach das Schwingen der Scheibe nicht beeinträchtigen. Der Klebstoff ist dabei zur Befestigung der piezoelektrischen Scheibe 2 mit der Auflage 16 angebracht oder auch an anderen Verbindungen der Bauteile vorgesehen.

Die Auflage 16 bzw. das Wandlergehäuse 3 bestehen auch bei der vollflächigen Auflage 16 aus PVDF, welches den Vorteil hat, daß es bei vielen Parametern, insbesondere bei der Impedanz den des Wassers angepaßt ist. Dies ist natürlich nur dann von Vorteil, wenn es sich bei dem zu messenden Medium auch um Wasser handelt.

Um die Montage noch effektiver zu gestalten, kann die zweite Anschlußelektrode 9 auch durch eine metallische Beschichtung gebildet werden.

Der Durchmesser der piezoelektrischen Scheibe 2 beträgt höchstens 7,5 mm. Der Durchmesser der piezoelektrischen Scheibe 2 ist 3,3 bis 3,8 mal größer als deren auf 1 MHz ausgelegte Dicke. Mittels des geringen Durchmessers der piezoelektrischen Scheibe wird eine hohe Druckfestigkeit geschaffen. Außerdem wird mit diesen Abmessungen die Resonanzfrequenz von 1 MHz erreicht.

Die Membran 8 bewirkt eine langzeit- und temperaturstabile Fixierung der piezoelektrischen Scheibe 2 und gewährleistet damit über eine lange Zeit konstante Messungen mit sehr kleinem Offset.

Im Eckbereich zwischen Steg 11 und angrenzender Fläche 13 des Wandlergehäuses 3 ist ein O-Ring 19 vorgesehen, der für eine Abdichtung der Membran 8 sorgt.

Für eine langzeitstabile Verbindung kann das Wandlergehäuse 1 bzw. der Steg 11 oder die Fläche 13 eine Nut aufweisen, in welche die Membran 8 eintaucht. Diese Nut kann durch Schmelzen einer umlaufenden Nase des Wandlergehäuses 3 zusätzlich mit Klebstoff gefüllt sein, damit der Ultraschallwandler 1 wasserdicht ist.

Wandlergehäuse 3 und Membran 8 können korrespondierende Schrägen aufweisen, damit die Teile bei der Montage leicht zusammenfallen können.

Der in Fig. 7 dargestellte Ultraschallwandler weist ein Wandlergehäuse 3 mit einer Auflage 16 auf, die vollflächig im wesentlichen über die gesamte Fläche der Rückseite 5 der piezoelektrischen Scheibe 2 ausgebildet ist. Dabei ist die zweite Anschlußelektrode 9 auf der Auflage 16 festgeklebt, womit eine Verbesserung der Güte erreicht wird, das Schwingungsgebilde stabil bleibt und Unebenheiten ausgeglichen werden. Die vollflächige Ausbildung der Auflage 16 führt dazu, daß die piezoelektrische Scheibe 2 stets eben aufliegt und die Meßqualität des Wandlers konstant bleibt. Die Dicke der Auflage 16 (sogenannte Absorberhöhe) beträgt 3,55 mm.
Fig. 8 zeigt eine mögliche Anordnung der beiden Ultraschallwandler 1, wobei die Strömungsrichtung des Mediums mittels der Pfeile gekennzeichnet ist.

In Fig. 9 ist ein Teil eines Durchflußmessers dargestellt, bei welchem ebenfalls zwei Ultraschallwandler 1 nebeneinander angeordnet sind. Jeder Ultraschallwandler 1 weist dabei ein gesondertes Wandlergehäuse 3 sowie jeweils eine Membran 8 auf. Die Membran 8 fixiert jeweils eine piezoelektrische Scheibe 2. Der Schallpfad verläuft quer zum Wasserpfad. Damit der Mitnahmeeffekt eintritt, muß der Schall mittels Spiegel umgelenkt werden. Die Spiegel zur Schallumlenkung wurden jedoch nicht dargestellt.

In Fig. 10 ist ein Ultraschallwandler 1 dargestellt, bei welchem zwei piezoelektrische Scheiben 2 in einem gemeinsamen Wandlergehäuse 3 angeordnet sind. Die beiden piezoelektrischen Scheiben 2 werden außerdem von einer gemeinsamen Membran 8 kontaktiert. Die technischen Vorteile bei dieser Anordnung bestehen darin, daß weniger Teile benötigt werden, ein einfacherer Anschluß ermöglicht wird und eine geringere Bauweise infolge des kürzeren Abstandes der beiden piezoelektrischen Scheiben 2 zueinander ermöglicht wird.

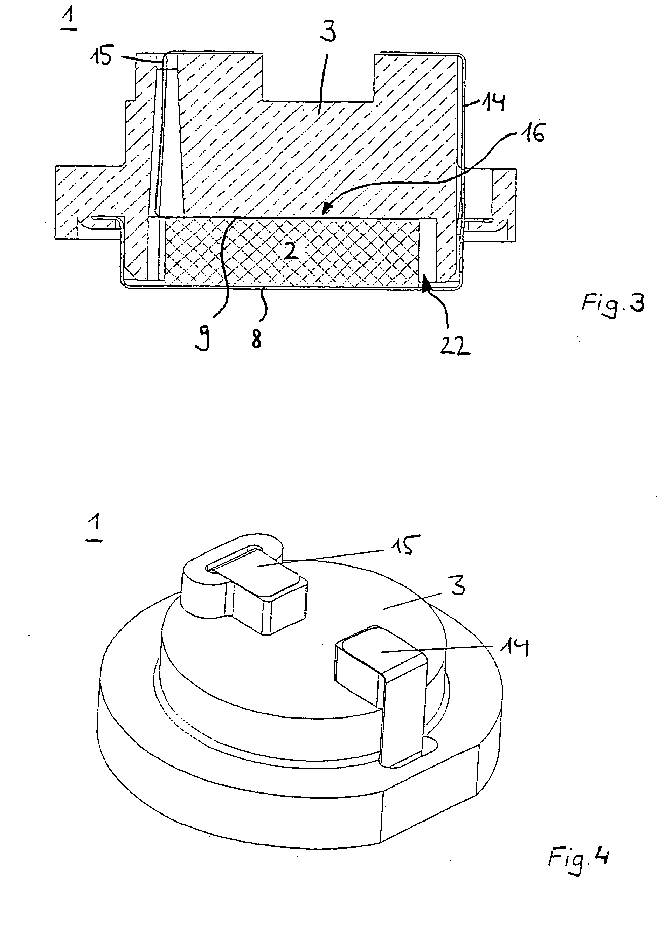

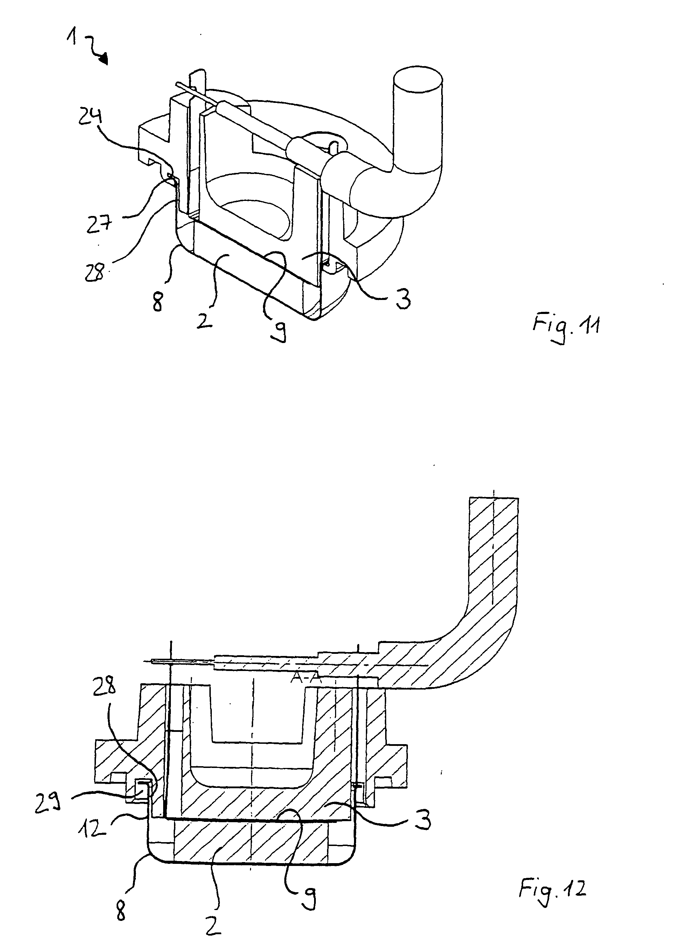

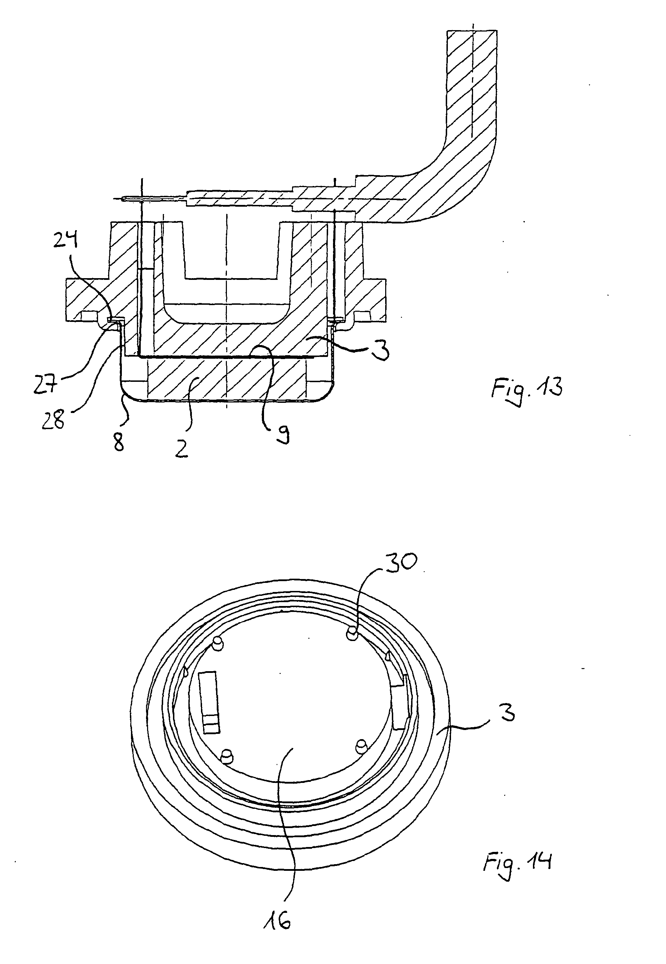

Der in den Figuren 11, 12 und 13 dargestellte Ultraschallwandler 1 weist im Gegensatz zu den vorherigen Ultraschallwandlern kein topfförmiges Wandlergehäuse im Sinne der Figuren 1 bis 10 auf. Beim Ultraschallwandler gemäß den Figuren 11, 12 und 13 ist die erste Anschlußelektrode ebenfalls als Membran 8 ausgebildet und zusätzlich zum Wandlergehäuse 3 vorgesehen, wobei die Membran 8 das Wandlergehäuse 3 verschließt. Auch in diesen Ausführungsvarianten ist die piezoelektrische Scheibe 2 sicher durch die topfförmige Membran 8 am Wandlergehäuse 3 gehalten. Die Membran 8 steht auch unmittelbar mit dem zu messenden Medium in Kontakt. Die Membran 8 weist außerdem eine Krempe 27 auf, die in den Figuren 11 und 13 in einer Rinne 24 des Wandlergehäuses 3 einliegt. In Figur 12 dagegen ist der obere Teil des Randes 12 der Membran 8 sowie die umlaufende Krempe 27 mittels einer Vergußmasse 29 in eine umlaufende Ausnehmung des Wandlergehäuses 3 eingegossen.

Außerdem verläuft der umlaufende Rand 12 der Membran 8 zu einem umlaufenden Steg 11 des Wandlergehäuses 3 unter Bildung eines Spalts 28. Der Spalt 28 sorgt für eine Entkopplung von Membran 8 und Wandlergehäuse 3, so daß diese Elemente sich bei Temperaturschwankungen möglichst ungehindert ausdehnen bzw. zusammenziehen können.

Das in Figur 14 dargestellte Wandlergehäuse 3 zeigt eine vollflächige Auflage 16 für die piezoelektrische Scheibe. Auf der Auflage 16 sind Zentrierzapfen 30 angeordnet, an welchen die zweite Anschlußelektrode 9 angrenzt und auf diese Weise in ihrer Lage fixiert wird. Die zweite Anschlußelektrode 9 ist allerdings in Figur 14 nicht dargestellt.

### BEZUGSZEICHENLISTE

- 1: Ultraschallwandler
- 2: piezoelektrische Scheibe
- 3: Wandlergehäuse
- 4: Vorderseite
- 5: Rückseite
- 6: erste Elektrode
- 7: zweite Elektrode
- 8: erste Anschlußelektrode (Membran)
- 9: zweite Anschlußelektrode
- 10: Aufnahme
- 11: Steg
- 12: Rand
- 13: Fläche
- 14: Fahne
- 15: Fahne
- 16: Auflage
- 17: Raum
- 18: Öffnungen
- 19: O-Ring
- 20: Rand
- 21: Stromkabel
- 22: offene Seite
- 23: Stufe
- 24: Rinne
- 25: Säule
- 26: Vorsprung
- 27: Krempe

- 28: Spalt
- 29: Vergußmasse
- 30: Zentrierzapfen

## Patentansprüche

1. Ultraschallwandler, insbesondere für den Einsatz in einem Durchflußmesser für flüssiges oder gasförmiges Medium, mit einem Wandlergehäuse (3), mit mindestens einem piezoelektrischen Körper, insbesondere einer piezoelektrischen Scheibe (2), an deren dem Medium zugewandten Vorderseite (4) eine erste Elektrode (6) sowie an deren Rückseite (5) eine zweite Elektrode (7) angeordnet ist, wobei die erste Elektrode (6) mit einer ersten Anschlußelektrode und die zweite Elektrode (7) mit einer zweiten Anschlußelektrode (9) zur Stromzuführung kontaktiert sind, die erste Anschlußelektrode als topfförmige Membran (8) ausgebildet ist, zusätzlich zum Wandlergehäuse (3) vorgesehen ist und das Wandlergehäuse (3) verschließt, wobei die Membran (8) einen umlaufenden Rand (12) aufweist,
**dadurch gekennzeichnet, daß**
sich der umlaufende Rand (12) der Membran (8) zwischen dem Wandlergehäuse (3) und einem außerhalb des Wandlergehäuses (3) angeordneten O-Ring (19), der Bestandteil des Ultraschallwandlers (1) ist, befindet.

2. Ultraschallwandler nach Anspruch 1,
**dadurch gekennzeichnet, daß**
das Wandlergehäuse (3) topfförmig mit offener Seite (22) ausgebildet ist und die Membran (8) die offene Seite (22) des Wandlergehäuses (3) verschließt.

3. Ultraschallwandler nach Anspruch 2,
**dadurch gekennzeichnet, daß**
die Membran (8) unmittelbar mit dem Medium in Kontakt steht.

4. Ultraschallwandler nach einem der vorhergehenden Ansprüche,
**dadurch gekennzeichnet, daß**
die Membran (8) eine Krempe (27) aufweist

5. Ultraschallwandler nach dem vorhergehenden Anspruch,
**dadurch gekennzeichnet, daß**
der umlaufende Rand (12) der Membran (8) an einem umlaufenden Steg (11) des Wandlergehäuses (3) anliegt.

6. Ultraschallwandler nach einem der vorhergehenden Ansprüche 1-5,
**dadurch gekennzeichnet, daß**
der umlaufende Rand (12) der Membran (8) zu einem umlaufenden Steg (11) oder zum Wandlergehäuses (3) unter Bildung eines Spalts (28) verläuft.

7. Ultraschallwandler nach einem der Ansprüche 5- 6,
**dadurch gekennzeichnet, daß**
der umlaufende Rand (12) der Membran (8) formschlüssig in den umlaufenden Steg (11) des Wandlergehäuses (3) eingreift oder den umlaufenden Steg (11) formschlüssig umschließt.

8. Ultraschallwandler nach einem der vorhergehenden Ansprüche,
**dadurch gekennzeichnet, daß**
die Membran (8) in einer Rinne (24) des Wandlergehäuses (3) einliegt.

9. Ultraschallwandler nach einem der vorhergehenden Ansprüche,
**dadurch gekennzeichnet, daß**
das Wandlergehäuse (3) und die Membran (8) korrespondierende Schrägen aufweisen.

10. Durchflußmesser für flüssiges oder gasförmiges Medium mit mindestens einem Ultraschallwandler (1) gemäß einem der Ansprüche 1 - 9.

## Claims

1. An ultrasonic transducer, in particular for use in a flow meter for a liquid or gaseous medium, having a transducer housing (3), with at least one piezoelectric body, in particular a piezoelectric disc (2), at the front side (4) of which facing the medium a first electrode (6) is arranged and at the rear side (5) of which a second electrode (7) is arranged, wherein the first electrode (6) is contacted with a first terminal electrode and the second electrode (7) is contacted with a second terminal electrode (9) for current feed, the first terminal electrode is in the form of a cup-shaped membrane (8), is provided in addition to the transducer housing (3) and closes the transducer housing (3), wherein the membrane (8) has a peripheral edge (12),
**characterised in that**
the peripheral edge (12) of the membrane (8) is located between the transducer housing (3) and an O-ring (19) that is arranged outside the transducer housing (3) and is a component of the ultrasonic transducer (1).

2. An ultrasonic transducer according to claim 1, **characterised in that** the transducer housing (3) is cup-shaped with an open side (22) and the membrane (8) closes the open side (22) of the transducer housing (3).

3. An ultrasonic transducer according to claim 2, **characterised in that** the membrane (8) is in direct contact with the medium.

4. An ultrasonic transducer according to any one of the preceding claims, **characterised in that** the membrane (8) has a rim (27).

5. An ultrasonic transducer according to the preceding claim, **characterised in that** the peripheral edge (12) of the membrane (8) rests against a peripheral projection (11) of the transducer housing (3).

6. An ultrasonic transducer according to any one of the preceding claims 1 to 5, **characterised in that** the peripheral edge (12) of the membrane (8) extends to a peripheral projection (11) or to the transducer housing (3), with the formation of a gap (28).

7. An ultrasonic transducer according to any one of claims 5 to 6, **characterised in that** the peripheral edge (12) of the membrane (8) engages positively in the peripheral projection (11) of the transducer housing (3) or encloses the peripheral projection (11) in a positively locking manner.

8. An ultrasonic transducer according to any one of the preceding claims, **characterised in that** the membrane (8) lies in a groove (24) of the transducer housing (3).

9. An ultrasonic transducer according to any one of the preceding claims, **characterised in that** the transducer housing (3) and the membrane (8) have corresponding bevels.

10. A flow meter for a liquid or gaseous medium having at least one ultrasonic transducer (1) according to any one of claims 1 to 9.

## Revendications

1. Transducteur à ultrasons, en particulier pour utilisation dans un débitmètre pour un fluide liquide ou gazeux, avec un boîtier de transducteur (3), avec au moins un corps piézo-électrique, en particulier un disque (2) piézo-électrique, sur la face avant (4), tournée vers le fluide, duquel est disposée une première électrode (6), ainsi que, sur sa face arrière (5), une deuxième électrode (7), la première électrode (6) étant mise en contact avec une première électrode de raccordement et la deuxième électrode (7) étant mise en contact avec une deuxième électrode de raccordement (9), pour l'amenée de courant électrique, la première électrode de raccordement étant réalisée sous forme de membrane (8) en forme de pot, prévue en plus du boîtier de transducteur (3) et fermant le boîtier de transducteur (3), la membrane (8) présentant un bord (12) de pourtour,
**caractérisé en ce que**
le bord (12) de pourtour de la membrane (8) se trouvant entre le boîtier de transducteur (3) et un élément torique (19), disposé à l'extérieur du boîtier de transducteur (3), faisant partie du transducteur à ultrasons (1).

2. Transducteur à ultrasons selon la revendication 1,
**caractérisé en ce que**
le boîtier de transducteur (3) est réalisée en forme de pot avec une face (22) ouverte, et la membrane (8) obture la face (22) ouverte du boîtier de transducteur (3).

3. Transducteur à ultrasons selon la revendication 2,
**caractérisé en ce que**
la membrane (8) est directement en contact avec le fluide.

4. Transducteur à ultrasons selon l'une des revendications précédentes,
**caractérisé en ce que**
la membrane (8) présente un rebord (27).

5. Transducteur à ultrasons selon l'une des revendications précédentes,
**caractérisé en ce que**
le bord (12) de pourtour de la membrane (8) appuie sur une nervure (11) de pourtour du boîtier de transducteur (3).

6. Transducteur à ultrasons selon l'une des revendications 1 à 5 précédentes,
**caractérisé en ce que**
le bord (12) de pourtour de la membrane (8) s'étend en formant un interstice (28) par rapport à une nervure (11) de pourtour ou par rapport au boîtier de transducteur (3).

7. Transducteur à ultrasons selon l'une des revendications 1 à 6,
**caractérisé en ce que**
le bord (12) de pourtour de la membrane (8) vient en prise, avec une liaison à ajustement de formes, dans la nervure (11) de pourtour du boîtier de transducteur (3), ou entoure, avec une liaison à ajustement de formes, la nervure (11) de pourtour.

8. Transducteur à ultrasons selon l'une des revendications précédentes,
**caractérisé en ce que**
la membrane (8) s'insère dans une goulotte (24) du boîtier de transducteur (3).

9. Transducteur à ultrasons selon l'une des revendications précédentes,
**caractérisé en ce que**
le boîtier de transducteur (3) et la membrane (8) présentent des chanfreins correspondants.

10. Débitmètre pour un fluide liquide ou gazeux, avec au moins un transducteur à ultrasons (1) selon l'une des revendications 1 à 9.
